# FASCICULE DE BREVET EUROPEEN

(11) **EP 2 763 892 B1**
(45) Date de publication et mention de la délivrance du brevet: **24.01.2018**
(21) Numéro de dépôt: 12775813.4
(22) Date de dépôt: 03.10.2012
(51) Int. Cl.: B64C 1/40, B64D 15/04

(54) **PROCÉDÉ DE FABRICATION D'UN PANNEAU D'ABSORPTION ACOUSTIQUE**
VERFAHREN ZUR HERSTELLUNG EINER SCHALLDÄMMENDEN TAFEL
METHOD OF MANUFACTURING A SOUND ABSORBING PANEL

(30) Priorité: 07.10.2011 FR 1159059
(43) Date de publication de la demande: 13.08.2014
(73) Titulaire: Safran Nacelles, 76700 Gonfreville-l'Orcher (FR)
(72) Inventeur: HURLIN, Hervé, 91430 Igny (FR); CARUEL, Pierre, 76600 Le Havre (FR)
(74) Mandataire: Gaillarde, Frédéric F. Ch.
(86) Numéro de dépôt international: PCT/FR2012/052232
(87) Numéro de publication internationale: WO 2013/050698

(56) Documents cités:
- EP-A1- 1 232 944
- WO-A1-2007/149535
- FR-A1- 2 912 781
- FR-A1- 2 917 067
- US-A- 3 106 503

## Description

La présente invention se rapporte à un procédé de fabrication d'un panneau d'absorption acoustique. L'invention se rapporte également au panneau d'absorption acoustique obtenu par le procédé de fabrication. La présente invention concerne encore une nacelle pour turboréacteur d'aéronef intégrant un panneau d'absorption acoustique obtenu par le procédé de fabrication selon l'invention.

Les turboréacteurs d'aéronef sont générateurs d'une pollution sonore importante. Il existe une forte demande visant à réduire cette pollution, et ce d'autant plus que les turboréacteurs utilisés deviennent de plus en plus puissants. La conception de la nacelle entourant un turboréacteur contribue pour une grande partie à la réduction de cette pollution sonore.

Afin d'améliorer d'avantage les performances acoustiques des aéronefs, les nacelles sont dotées de panneaux acoustiques visant à atténuer la transmission des bruits générés par le turboréacteur.

Généralement, de tels panneaux acoustiques sont installés sur la nacelle entourant le turboréacteur en entrée et/ ou sortie du canal de soufflante du turboréacteur.

Une nacelle pour turboréacteur d'aéronef a typiquement plusieurs fonctionnalités comme celles de maintenir le turboréacteur à un mat relié à une aile de l'aéronef, d'inverser la poussée du turboréacteur, ou encore d'intégrer des dispositifs d'atténuation de bruit et de dégivrage.

Lors d'une phase de vol d'un aéronef, il est fréquent que les conditions climatiques en altitude entraînent une formation de givre à différents endroits de l'aéronef. Du givre peut par exemple se former sur la nacelle du turboréacteur, notamment sur le bord d'attaque de ladite nacelle. Une telle formation de givre est inacceptable, car elle peut entraîner des modifications du profil aérodynamique de la nacelle, ou peut aussi endommager le turboréacteur dans le cas d'arrachement de blocs de glace qui se sont formés sur la lèvre d'entrée d'air de la nacelle.

Il est donc impératif d'équiper la nacelle du turboréacteur d'un dispositif évitant la formation du givre et de la glace sur la nacelle.

De tels dispositifs sont, de manière connue, réalisés en prélevant des gaz chauds dans le compresseur du turboréacteur ou en les produisant par compression ou chauffage, et en les redirigeant sur la surface de la nacelle qui peut être affectée par la formation de glace.

Un problème récurrent est lié à la cohabitation des dispositifs d'absorption acoustique et de dégivrage. En effet, en général, un panneau d'absorption acoustique se situe à proximité de la lèvre d'entrée d'air de la nacelle, ce qui a pour effet de limiter la partie fonctionnelle du dispositif de dégivrage aux zones de la nacelle non recouvertes par le panneau d'absorption acoustique.

Le document EP 0 913 326 propose une solution à ce problème grâce à l'installation d'un tube « Picolo » à l'intérieur de la lèvre d'entrée d'air de la nacelle ou d'un système de circulation tournante du fluide de dégivrage, permettant d'injecter un fluide dégivrant à travers la structure à âme alvéolaire formant la couche intermédiaire du dispositif d'absorption acoustique.

Le document EP 1 103 462 décrit également un système de circulation tournante d'un fluide de dégivrage, tube « swirl », qui délivre un fluide de dégivrage traversant ensuite une structure à âme alvéolaire d'un dispositif de traitement acoustique.

Un inconvénient commun à ces solutions est que le traitement acoustique se trouve perturbé par ce fluide, ce qui entraîne un mauvais fonctionnement du dispositif d'absorption acoustique.

On connaît également le document US 3 933 327, qui propose un dispositif de dégivrage d'entrée d'air de nacelle de turboréacteur fonctionnel au niveau de la zone de traitement acoustique, grâce à des ouvertures prévues dans l'épaisseur de la structure à âme alvéolaire du dispositif de traitement acoustique, ces ouvertures permettant de faciliter le passage d'un gaz chaud à travers les cellules de ladite structure. Un inconvénient majeur de cette solution est la complexité de fabrication du dispositif de traitement acoustique. En effet, la structure alvéolaire est complexe à réaliser dans la mesure où l'on doit réaliser sur chaque paroi cellulaire des ouvertures destinées à laisser passer le gaz chaud.

Enfin, le document FR 2 820 715 décrit des moyens d'atténuation acoustique formés par une pluralités d'îlots non liés entre eux, entre lesquels circule un fluide chaud sous pression issu d'un système de dégivrage du capot d'entrée d'air d'un moteur à réaction. Selon ces procédé et dispositif, la performance du dispositif de dégivrage n'est pas affectée par le dispositif de traitement acoustique. Cependant, tout d'abord, les performances des moyens d'atténuation acoustique se trouvent fortement réduites car la surface de traitement acoustique est diminuée à cause des couloirs agencés dans la lèvre d'entrée d'air pour le passage du fluide chaud sous pression. Ensuite, l'intégration des moyens d'atténuation acoustique est compliquée à réaliser, car il est nécessaire de prévoir un couloir de circulation du fluide chaud entre deux bandes de structure à âme alvéolaire.

La présente invention a pour but de pallier ces inconvénients, c'est-à-dire de proposer un procédé et un dispositif facile de fabrication, pour lequel, une fois intégré à une nacelle de turboréacteur par exemple, les performances du dispositif de dégivrage ne sont pas affectées par la présence du panneau d'absorption sonore, et inversement, les performances du panneau d'absorption sonore sont peu réduites lors du fonctionnement du dispositif de dégivrage.

A cet effet, l'invention propose un procédé de fabrication d'un panneau d'absorption acoustique selon la revendication 1. Le procédé de fabrication selon l'invention permet de réaliser de manière simple un panneau d'absorption acoustique. En effet, par rapport à l'art antérieur, on forme sur une face de l'ensemble de cellules d'absorption acoustique non recouverte par une peau réflectrice au moins un passage sur une partie de l'épaisseur dudit ensemble, les procédés de réalisation de ces passages étant décrits ci-après. On obtient un panneau d'absorption acoustique conformé pour pouvoir être intégré notamment dans une lèvre d'entrée d'air d'une nacelle pour turboréacteur d'aéronef. Les passages forment des canaux dits canaux principaux, et sont destinés à la circulation d'un fluide de dégivrage. Selon l'invention, lesdits canaux principaux sont pratiqués sur une partie seulement de l'épaisseur de l'ensemble de cellules d'absorption acoustique. De par cette disposition, on altère très peu les performances acoustiques du panneau d'absorption acoustique. Par ailleurs, lorsque le panneau d'absorption acoustique réalisé par le procédé de fabrication selon l'invention est par exemple intégré à une nacelle de turboréacteur d'aéronef, les canaux principaux définis sur une face de l'ensemble de cellules d'absorption acoustique permettent une communication entre les cellules, de façon à ce que le fluide de dégivrage qui provient d'un dispositif de dégivrage et qui rencontre le panneau d'absorption acoustique puisse circuler librement à l'intérieur de l'ensemble de cellules d'absorption acoustique, sans en altérer pour autant ses performances acoustiques.

Selon une autre caractéristique du procédé de fabrication selon l'invention, on fixe des bandes métalliques sur au moins une partie de l'une ou l'autre des parois interne ou externe du panneau d'absorption acoustique, dans une direction sensiblement transversale à celle des canaux principaux.

Cette disposition permet de manière avantageuse d'améliorer la conductivité thermique de l'ensemble de cellules d'absorption acoustique. Ceci contribue à la résolution des problèmes de l'art antérieur liés à la bonne transmission de l'énergie thermique du fluide de dégivrage aux cellules de l'ensemble de cellules d'absorption acoustique.

Selon l'invention, l'ensemble de cellules d'absorption acoustique comprend une structure à âme alvéolaire comprenant une pluralité de cellules alvéolaires.

L'ensemble de cellules d'absorption acoustique peut être formé par expansion d'au moins deux feuilles liées entre elles en des zones de liaison alternées.

Le panneau d'absorption acoustique selon l'invention peut être réalisé à partir d'un panneau d'absorption acoustique connu de l'homme du métier, simplement en formant des passages sur une face dudit panneau, ces passages étant réalisés par les procédés décrits ci-après. Le panneau d'absorption acoustique selon l'invention est conformé pour pouvoir être intégré notamment dans une lèvre d'entrée d'air d'une nacelle pour turboréacteur d'aéronef.

Selon l'invention, on forme l'ensemble de cellules d'absorption acoustique par expansion d'au moins deux feuilles liées entre elles en des zones de liaison réduites formant un collage partiel, de sorte que lors de l'expansion desdites feuilles, l'on forme des canaux secondaires sensiblement transverses aux canaux principaux.

Grâce à une telle caractéristique, on crée une circulation entre les canaux principaux. Ceci permet, lors de l'intégration d'un panneau acoustique réalisé par le procédé de fabrication selon l'invention au sein d'une nacelle pour turboréacteur d'aéronef par exemple, d'augmenter sensiblement la zone de passage du fluide de dégivrage dans le panneau d'absorption acoustique. Ainsi, par un tel procédé de réalisation d'un ensemble de cellules d'absorption acoustique, on améliore le transfert de l'énergie thermique du fluide de dégivrage entre les cellules. Par ailleurs, le fait que les canaux secondaires soient transverses aux canaux principaux permet de limiter la perte de surface d'absorption acoustique.

Selon l'invention, on usine sur une des faces de l'ensemble de cellules d'absorption acoustique au moins une rainure formant au moins un passage.

Grâce à cette disposition, les passages permettent la circulation d'un fluide de dégivrage à l'intérieur de l'ensemble de cellules d'absorption acoustique, sans en altérer son fonctionnement et ses performances. Par ailleurs, lesdits passages formant les canaux de communication entre les cellules sont réalisés par un simple procédé de rainurage connu de l'homme du métier.

Selon l'invention, on profile les rainures dans le sens de la longueur ou dans le sens de la largeur de l'ensemble de cellules d'absorption acoustique.

Selon un autre mode de réalisation de l'invention, on profile les rainures en biais par rapport à la longueur ou à la largeur de l'ensemble de cellules d'absorption acoustique.

Selon une caractéristique de l'invention, on forme l'ensemble de cellules d'absorption acoustique par expansion d'au moins deux feuilles liées entre elles en des zones de liaison réduites formant un collage partiel, de sorte que lors de l'expansion desdites feuilles, l'on forme au moins un passage formant au moins un canal principal de communication entre les cellules.

Grâce à cette alternative à la formation des passages par le procédé de rainurage, les passages sont réalisés par le même procédé selon lequel on forme les canaux secondaires, c'est-à-dire par expansion d'au moins deux feuilles liées entre elles en des zones de liaison réduites formant un collage partiel.

Selon une variante de l'invention, l'ensemble de cellules d'absorption acoustique comprend une mousse acoustique à cellules ouvertes.

Par ailleurs, l'invention concerne également un panneau d'absorption acoustique réalisé par le procédé de fabrication selon l'invention.

L'invention se rapporte également à une nacelle pour turboréacteur d'aéronef comprenant une section amont, une section médiane et une section aval, ladite nacelle étant remarquable en ce qu'au moins une section de ladite nacelle comprend au moins un panneau d'absorption acoustique selon l'invention.

Selon une caractéristique de la nacelle selon l'invention, un panneau d'absorption acoustique est fixé en la partie externe de la lèvre d'entrée d'air de la nacelle, et la nacelle comprend un dispositif de dégivrage apte à acheminer un fluide de dégivrage depuis un conduit d'arrivée vers une chambre d'évacuation dudit fluide, par l'intermédiaire d'au moins un canal principal de communication entre les cellules de l'ensemble de cellules d'absorption acoustique.

Grâce à cette disposition, la distribution du fluide de dégivrage dans la structure à âme alvéolaire est réalisée de manière sensiblement homogène sur toute la circonférence de la veine.

D'autres caractéristiques, buts et avantages de la présente invention, apparaîtront à la lecture de la description détaillée qui va suivre, selon les modes de réalisation donnés à titre d'exemples non limitatifs, et en référence aux dessins annexés sur lesquels :
- la figure 1 représente une vue en coupe d'une nacelle pour turboréacteur munie en sa partie amont d'un panneau d'absorption acoustique ;
- la figure 2 illustre le procédé de fabrication d'une structure à âme alvéolaire ;
- la figure 3 représente schématiquement une structure à âme alvéolaire selon l'invention, recouverte en sa face interne d'une paroi réflectrice, et comprenant en sa face externe des canaux de communication entre les cellules alvéolaires ;
- la figure 4 est une vue similaire à la figure 3, la structure étant retournée par rapport à la figure 3, c'est-à-dire que la face externe sur laquelle sont profilés les canaux est représentée vers le haut ;
- la figure 5 est une vue en coupe de la section amont de la nacelle pour turboréacteur, illustrant l'intégration d'un panneau acoustique selon l'invention dans ladite nacelle, et décrivant le fonctionnement selon un premier mode de réalisation de la fonction de dégivrage ;
- la figure 6 est une vue similaire à la figure 6, illustrant un deuxième mode de réalisation de la fonction de dégivrage ;
- la figure 7 représente un autre mode de réalisation de la structure à âme alvéolaire, selon lequel on ajoute des bandes métalliques sur une face de ladite structure ou sur une paroi du panneau d'absorption acoustique ;
- la figure 8 illustre le procédé de réalisation de la structure à âme alvéolaire selon un autre mode de réalisation des canaux, ces canaux pouvant, comme représenté, réaliser un écoulement secondaire par rapport aux canaux primaires décrits aux figures 3 et 4.

Sur l'ensemble des figures, des références identiques ou analogues désignent des organes ou ensembles d'organes identiques ou analogues.

Par ailleurs, dans la présente description, sont utilisés les termes « amont », « médiane » et « aval », et font référence aux sections de la nacelle, la section amont correspondant au bord d'attaque de la nacelle et la section aval correspondant au bord de fuite de ladite nacelle.

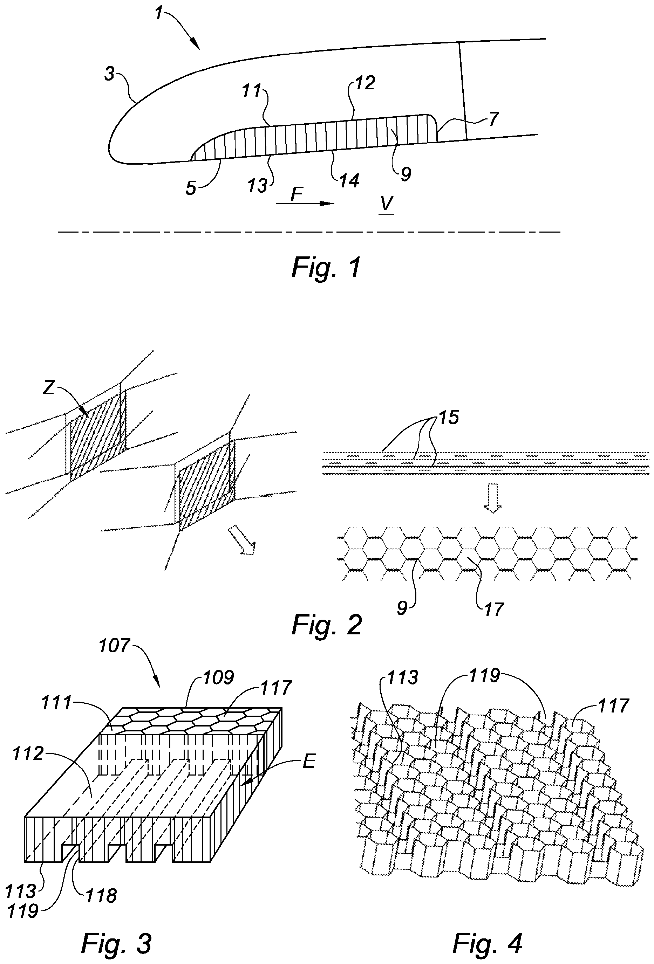

La figure 1 illustre de façon schématique la section amont, représentée partiellement, d'une nacelle 1 pour turboréacteur d'aéronef. Une telle section amont comprend une lèvre d'entrée d'air 3 de la nacelle 1, munie en sa partie externe 5 d'un panneau d'absorption acoustique 7 destiné à atténuer acoustiquement le bruit et les vibrations générés par le turboréacteur de l'aéronef.

De manière connue, un panneau d'absorption acoustique comprend au moins un ensemble de cellules d'absorption acoustique, assurant le traitement acoustique, sur la face interne 11 duquel est fixée une paroi interne 12 et sur la face externe 13 duquel est fixée une paroi externe 14.

En se référant à la figure 1, un ensemble de cellules d'absorption acoustique est constitué par une structure à âme alvéolaire 9, mais peut tout à fait être constitué par une structure poreuse (non représentée) du type mousse à cellules ouvertes et communicantes. Une telle mousse peut être en polyuréthane ou métallique par exemple.

La paroi interne 12 est fixée par tout moyen connu de l'homme du métier, par exemple par collage. Il s'agit d'une paroi réflectrice, généralement constituée par une peau formant réflecteur ou par un septum. Elle définit la fin de la zone de traitement acoustique.

La paroi externe 14 est typiquement constituée par une peau perforée et est apte à laisser passer les ondes sonores à atténuer provenant de la veine V de circulation d'un flux d'air F à atténuer acoustiquement.

Le panneau d'absorption acoustique 7 est classiquement fixé à la lèvre d'entrée d'air 3 de la nacelle 1 du turboréacteur de telle sorte qu'il résiste aux températures élevées engendrées lors d'une opération de dégivrage réalisée par un dispositif de dégivrage non représenté. Typiquement, le panneau d'absorption acoustique 7 peut être collé, brasé ou soudé sur la lèvre d'entrée d'air 3 de la nacelle, cette fixation peut se faire sur toute la surface du matériau alvéolaire ou être partielle.

Typiquement, une lèvre d'entrée d'air de nacelle pour turboréacteur est métallique ou dans tout autre matériau connu de l'homme du métier, ayant une bonne tenue à la chaleur et une conductivité thermique suffisante pour assurer un dégivrage de ladite lèvre.

De manière connue, et en se référant à la figure 2, une structure à âme alvéolaire 9 est obtenue par un procédé qui consiste à étendre des feuilles 15 liées entre elles par collage, brasage ou soudage en des zones de liaison Z alternées, de façon à former une pluralité de cellules alvéolaires 17, lesdites cellules alvéolaires formant alors les cellules de l'ensemble de cellules d'absorption acoustique.

Une telle structure à âme alvéolaire peut être fabriquée dans un alliage métallique, tel que l'aluminium ou le titane, ou dans un matériau tel que le Nomex® qui correspond à un papier à base de fibres polyamides et de résine phénolique.

Dans le cas où l'ensemble de cellules d'absorption acoustique est réalisé par une mousse acoustique (non représentée) telle que précédemment décrite, les cellules d'absorption acoustique sont formées par des cellules ouvertes formant des cavités de ladite mousse, lesdites cellules étant constituées par des bulles d'air étant communicantes entre elles.

On se réfère maintenant aux figures 3 et 4. Selon l'invention, après l'étape de formation de la structure à âme alvéolaire telle que précédemment décrite en figure 2, on fixe sur l'une des faces 111, 113 de la structure à âme alvéolaire 109 une paroi réflectrice 112.

La paroi réflectrice 112 occupe une partie seulement de la face interne de la structure à âme alvéolaire 109, de façon à laisser un accès à ladite structure permettant de laisser entrer ou sortir un fluide de dégivrage, comme décrit ci-après.

La paroi réflectrice 112 est fixée sur la face interne 111 de la structure à âme alvéolaire 109 par tout procédé connu de l'homme du métier, comme décrit précédemment.

Une fois la paroi réflectrice 112 fixée, on forme sur la face 113 opposée à la face 111 des passages 118 sur une partie seulement de l'épaisseur E de la structure à âme alvéolaire 109.

De tels passages sont réalisés par un procédé d'usinage connu tel qu'un procédé de rainurage, par lequel on forme une ou plusieurs rainures 119 sur la face 113 de la structure à âme alvéolaire 109 non recouverte par la paroi réflectrice 112. Ces passages 118 forment des canaux principaux de communication entre les cellules et sont destinés à la circulation d'un fluide de dégivrage.

Par ailleurs, ces passages 118 peuvent également être formés lors de la formation de la structure à âme alvéolaire 109, lors de la phase d'expansion des feuilles 15, comme décrit ci-après.

Les rainures 119 sont réalisées dans le sens de la longueur de la structure à âme alvéolaire 109.

Les rainures 119 peuvent également indifféremment être réalisées dans le sens de la largeur de la structure à âme alvéolaire 109, ou encore en biais par rapport à la longueur ou à la largeur de la structure à âme alvéolaire 109.

Les rainures 119 rendent alors possible la communication entre deux cellules alvéolaires 117, et forment ainsi des canaux, appelés canaux principaux, aptes et destinés à la circulation d'un fluide de dégivrage, dont le fonctionnement est décrit ci-après.

L'ensemble constitué par la peau interne 112 et la structure 109 ainsi formé est alors destiné à être assemblé à une peau externe perforée (non représentée) permettant le passage d'un flux d'air F à atténuer acoustiquement lorsque le panneau d'absorption acoustique 107 ainsi constitué est intégré à une nacelle de turboréacteur.

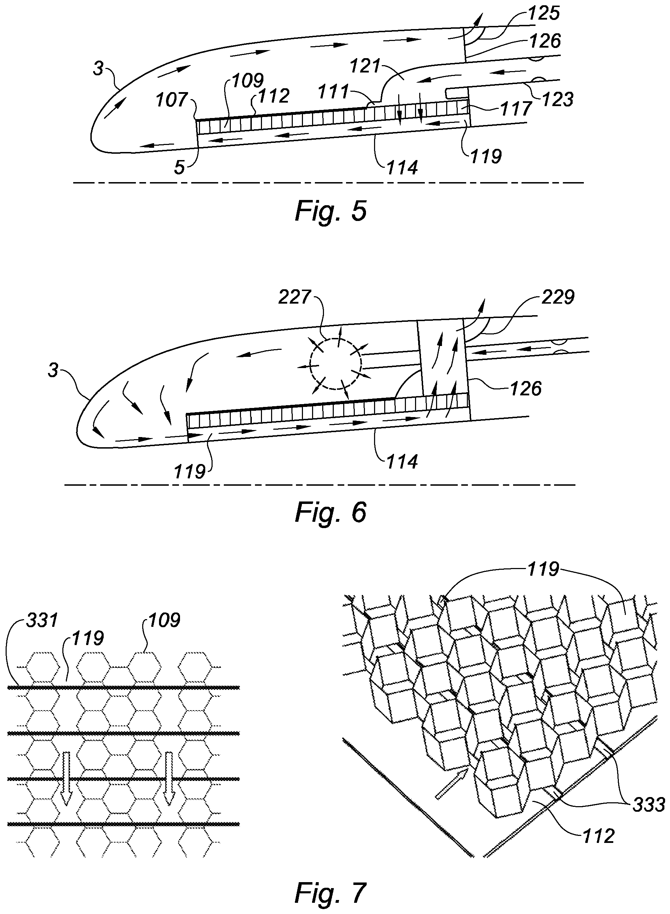

On se réfère maintenant à la figure 5, illustrant une lèvre d'entrée d'air 3 d'une nacelle pour turboréacteur munie d'un panneau d'absorption acoustique 107 réalisé par le procédé selon l'invention et d'un dispositif de dégivrage.

La lèvre d'entrée d'air 3 comprend en sa partie externe 5 un panneau d'absorption acoustique 107 réalisé par le procédé selon l'invention.

Par ailleurs, selon l'invention, la nacelle est équipée d'un dispositif de dégivrage qui achemine un fluide de dégivrage depuis le compresseur du turboréacteur (non représenté) ou tout autre générateur d'air comprimé chaud, vers une chambre de dégivrage 121 de forme sensiblement annulaire et directement reliée à la face interne 111 de la structure à âme alvéolaire 109, en la partie aval du panneau d'absorption acoustique 107.

Grâce à cette disposition, la distribution du fluide de dégivrage dans la structure à âme alvéolaire 109 est réalisée de manière sensiblement homogène sur toute la circonférence de la veine.

Les cellules alvéolaires 117 de la structure à âme alvéolaire 109 débouchent dans les canaux principaux 119 situés en la face externe 113 de ladite structure.

Lors d'une opération de dégivrage, le fluide de dégivrage circule depuis un conduit d'arrivée 123 relié au compresseur du turboréacteur (non représenté) vers les cellules alvéolaires 117 de la structure 109 avant d'atteindre les canaux principaux 119.

Le fluide de dégivrage circule ensuite dans les canaux principaux, ce qui a pour effet de créer un transfert thermique et une bonne répartition de l'énergie thermique vers les cellules alvéolaires de la structure.

Lorsque le fluide de dégivrage arrive en bout d'un canal 119, il pénètre à l'intérieur de la lèvre d'entrée d'air 3 de la nacelle 1, puis est redirigé par la paroi de ladite lèvre 3 vers une chambre d'évacuation 125 sensiblement annulaire et débouchant vers l'extérieur de la nacelle, permettant audit fluide de s'échapper. Typiquement, la chambre d'évacuation se situe au niveau de la paroi de fermeture 126 de la lèvre d'entrée d'air 3.

Grâce aux canaux principaux, le fluide de dégivrage peut parcourir la structure à âme alvéolaire sans pour autant obstruer les cellules alvéolaires. Ainsi, la performance d'absorption acoustique du panneau d'absorption acoustique n'est pas affectée lors du fonctionnement du dispositif de dégivrage et du passage du fluide de dégivrage dans la structure à âme alvéolaire.

On pourra également ne pas percer la paroi externe 114 au droit des canaux principaux 119 de façon à éviter l'injection d'air chaud dans le moteur, ceci au détriment de la surface traitée acoustique et donc de l'atténuation acoustique.

On se réfère maintenant à la figure 6, illustrant une variante de distribution du fluide de dégivrage, selon laquelle on fixe dans la lèvre d'entrée d'air, comme précédemment décrit, un panneau d'absorption acoustique réalisé par le procédé selon l'invention, mais dont la distribution du fluide de dégivrage est réalisée par l'intermédiaire d'un tube Picolo 227, agencé dans la lèvre d'entrée d'air 3 de la nacelle 1.

Le tube Picolo est, de manière connue, relié à un conduit d'arrivée du fluide de dégivrage, puis diffuse par l'intermédiaire d'une pluralité d'orifices (non représentés) le fluide de dégivrage directement à l'intérieur de la lèvre d'entrée d'air 3.

Le fluide de dégivrage pénètre alors, comme représenté, directement dans les canaux principaux 119 de la structure à âme alvéolaire 109.

Le passage du fluide de dégivrage à travers ces canaux 119 est réalisé en canalisant l'évacuation de ceux-ci vers une chambre d'évacuation 229 sensiblement annulaire et débouchant vers l'extérieur de la nacelle. La chambre d'évacuation est par exemple installée au niveau de la paroi de fermeture 126 de la lèvre d'entrée d'air 3.

Selon une autre variante non représentée, la distribution du fluide de dégivrage peut également être réalisée par un système de rotation des gaz (tube « swirl »).

On se réfère maintenant à la figure 7, illustrant un autre mode de réalisation du panneau d'absorption acoustique, selon lequel le panneau d'absorption acoustique 107 réalisé par le procédé de fabrication selon l'invention tel que décrit précédemment est pourvu de bandes métalliques 331 que l'on fixe sur la paroi interne 112 dudit panneau.

Ces bandes métalliques 331 peuvent bien entendu être fixées sur la paroi externe 114 du panneau d'absorption acoustique 107.

Les bandes métalliques 331 sont disposées dans une direction sensiblement transversale à celle des canaux principaux 119 de la structure à âme alvéolaire 109.

Les bandes métalliques 331 s'étendent sur toute ou partie de la longueur de la paroi interne 112 ou externe 114 du panneau 107 sur laquelle elles sont fixées.

Ces bandes métalliques peuvent être fixées pendant la phase de brasage de la structure à âme alvéolaire ou, une fois la structure alvéolaire réalisée par le procédé selon l'invention, par tout autre moyen comme, par exemple, par soudage ou par dépôt électrolytique.

De façon à mieux intégrer ces bandes métalliques, il peut être prévu de réaliser des rainures 333 sur la paroi interne 112 du panneau d'absorption acoustique 107. Ces rainures peuvent bien entendues être réalisées sur la paroi externe 114 dudit panneau.

Ces bandes métalliques 331 sont réalisées dans un matériau possédant de bonnes propriétés de conductivité thermique, et sont nécessairement dans un matériau plus conducteur que celui utilisé pour les parois 112, 114 du panneau d'absorption acoustique 107.

Grâce à cette variante, la conductivité thermique est augmentée transversalement aux canaux principaux 119 de la structure à âme alvéolaire 109.

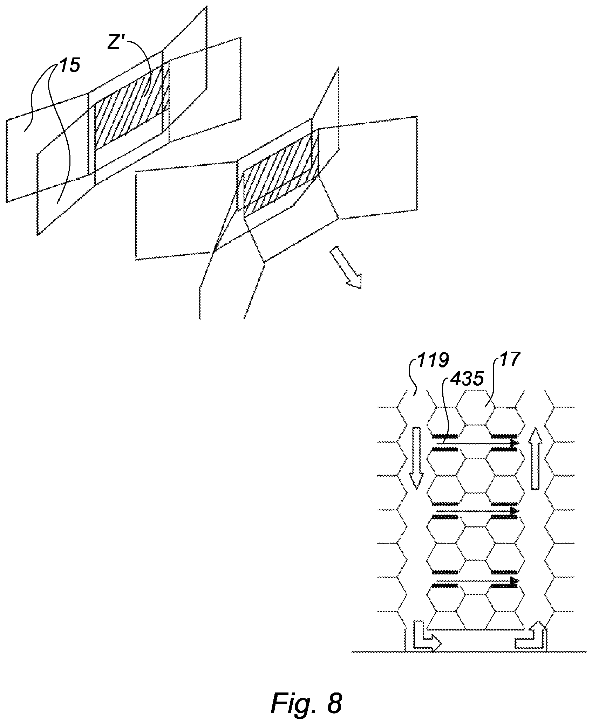

On se réfère maintenant à la figure 8, qui décrit un autre mode de réalisation de la structure à âme alvéolaire 109.

Comme décrit précédemment en référence à la figure 2, on réalise classiquement une structure à âme alvéolaire grâce à un procédé connu qui consiste à étendre des feuilles 15 collées, brasées ou soudées entre elles en des zones de liaison Z alternées, de façon à former une pluralité de cellules alvéolaires 17.

Selon le mode de réalisation représenté en figure 8, on ne colle que partiellement une partie de la hauteur d'une cellule alvéolaire 17 sur une zone de liaison Z', dite réduite, formant un collage partiel afin que se crée, lors de la phase d'expansion, une section de passage formant ainsi des canaux.

Lorsque l'on applique à cette structure 109 le procédé de fabrication selon l'invention, selon lequel on forme des canaux principaux 119 par le procédé de rainurage, lesdits canaux alors formés par collage partiel lors de la phase d'expansion de la structure à âme alvéolaire forment des canaux secondaires 435.

Ces canaux 435 sont transverses aux canaux principaux créés par le procédé de rainurage.

Grâce à cette disposition, on crée une circulation entre les canaux principaux 119, ce qui a pour résultat d'augmenter la surface soumise au fluide de dégivrage.

Par ailleurs, le fait que les canaux secondaires soient transverses aux canaux principaux 119 permet de limiter la perte de surface acoustique du panneau d'absorption acoustique.

Selon une variante non représentée sur les figures, ce procédé d'expansion des feuilles 15 par collage partiel peut également être utilisé afin de former les canaux principaux 119.

En effet, selon cette variante, on ne réalise pas le procédé de rainurage tel que défini précédemment, mais les passages entre les cellules alvéolaires sont réalisés grâce au collage partiel des feuilles entre elles qui, lors de la phase d'expansion, forment alors des canaux de communication entre lesdites cellules alvéolaires.

Grâce au procédé de fabrication selon l'invention, on est capable de réaliser de manière simple un panneau d'absorption acoustique efficace, d'une part, pour réduire le bruit de la soufflante transmise dans le canal de l'entrée d'air et, d'autre part, pour ne pas gêner le fonctionnement d'un dispositif de dégivrage nécessaire sur toute nacelle de turboréacteur d'aéronef.

Par ailleurs, grâce à d'autres caractéristiques du procédé de fabrication d'un tel panneau acoustique, on sait maintenant augmenter sensiblement la zone de passage du fluide de dégivrage dans le panneau d'absorption acoustique sans en dégrader pour autant ses performances acoustiques.

Comme il va de soi, l'invention ne se limite pas aux seules formes de réalisation de ce panneau acoustique et de la nacelle intégrant ce panneau acoustique, décrites ci-dessus à titre d'exemples, mais elle embrasse au contraire toutes les variantes.

## Revendications

1. Procédé de fabrication d'un panneau d'absorption acoustique (107) par lequel on rapporte une paroi réflectrice (112) sur au moins une partie de l'une des faces (111, 113) d'un ensemble de cellules d'absorption acoustique, on forme sur la face (111, 113) opposée à ladite une des faces (111, 113) au moins un passage (118) sur une partie de l'épaisseur (E) dudit ensemble, ledit passage (118) formant au moins un canal principal (119) de communication entre les cellules et étant destiné à la circulation d'un fluide de dégivrage, ledit procédé étant **caractérisé en ce que** l'on usine sur une des faces (111, 113) de l'ensemble de cellules d'absorption acoustique au moins une rainure formant au moins un passage (118).

2. Procédé de fabrication d'un panneau d'absorption acoustique selon la revendication 1, **caractérisé en ce que** l'on fixe des bandes métalliques (331) sur au moins une partie de l'une ou l'autre des parois interne (112) ou externe (114) du panneau d'absorption acoustique (107), dans une direction sensiblement transversale à celle des canaux principaux (119).

3. Procédé de fabrication d'un panneau d'absorption acoustique selon l'une quelconque des revendications 1 ou 2, **caractérisé en ce que** ledit ensemble de cellules d'absorption acoustique comprend une structure à âme alvéolaire (109) comprenant une pluralité de cellules alvéolaires (117).

4. Procédé de fabrication d'un panneau d'absorption acoustique selon l'une quelconque des revendications 1 à 3, **caractérisé en ce que** l'on forme l'ensemble de cellules d'absorption acoustique par expansion d'au moins deux feuilles (15) liées entre elles en des zones de liaison (Z) alternées.

5. Procédé de fabrication d'un panneau d'absorption acoustique selon l'une quelconque des revendications 1, 3 ou 4, **caractérisé en ce que** l'on forme l'ensemble de cellules d'absorption acoustique par expansion d'au moins deux feuilles (15) liées entre elles en des zones de liaison réduites (Z') formant un collage partiel, de sorte que lors de l'expansion desdites feuilles, l'on forme des canaux secondaires (435) sensiblement transverses aux canaux principaux (331).

6. Procédé de fabrication d'un panneau d'absorption acoustique selon l'une quelconque des revendications 1 à 5, **caractérisé en ce que** l'on profile les rainures (119) dans le sens de la longueur ou dans le sens de la largeur de l'ensemble de cellules d'absorption acoustique.

7. Procédé de fabrication d'un panneau d'absorption acoustique selon l'une quelconque des revendications 1 à 5, **caractérisé en ce que** l'on profile les rainures (119) en biais par rapport à la longueur ou à la largeur de l'ensemble de cellules d'absorption acoustique.

8. Procédé de fabrication d'un panneau d'absorption acoustique selon l'une quelconque des revendications 1, 2, 6, ou 7, **caractérisé en ce que** l'ensemble de cellules d'absorption acoustique comprend une mousse acoustique à cellules ouvertes.

9. Panneau d'absorption acoustique (107) réalisé par le procédé de fabrication selon l'une quelconque des revendications 1 à 8.

10. Nacelle (1) pour turboréacteur d'aéronef comprenant une section amont formant une lèvre d'entrée (3) d'un flux d'air F à atténuer acoustiquement, une section médiane et une section aval, **caractérisée en ce qu'**au moins une section de ladite nacelle comprend au moins un panneau d'absorption acoustique (107) selon la revendication 9.

11. Nacelle (1) pour turboréacteur d'aéronef selon la revendication 10, **caractérisée en ce qu'**un panneau d'absorption acoustique (107) est fixé en la partie externe (5) de la lèvre d'entrée d'air (3) et **en ce que** ladite nacelle comprend un dispositif de dégivrage apte à acheminer un fluide de dégivrage depuis un conduit d'arrivée (123) vers une chambre de d'évacuation (125) dudit fluide, par l'intermédiaire d'au moins un canal principal (119) de communication entre les cellules de l'ensemble de cellules d'absorption acoustique.

## Patentansprüche

1. Verfahren zum Fertigen einer Schallabsorptionsplatte (107), durch die eine reflektierende Wand (112) auf mindestens einem Teil einer ihrer Seiten (111, 113) einer Einheit von Schallabsorptionszellen angebaut wird, auf der Seite (111, 113), die der einen der Seiten (111, 113) gegenüber liegt, mindestens eine Passage (118) auf einem Teil der Stärke (E) der Einheit gebildet wird, wobei die Passage (118) mindestens einen Hauptkanal (119) zur Verbindung zwischen den Zellen bildet und zur Zirkulation eines Enteisungsfluids bestimmt ist, Verfahren **dadurch gekennzeichnet, dass** auf einer der Seiten (111, 113) der Einheit von Schallabsorptionszellen mindestens eine Rille, die mindestens eine Passage (118) bildet, eingearbeitet wird.

2. Verfahren zum Fertigen einer Schallabsorptionsplatte nach Anspruch 1, **dadurch gekennzeichnet, dass** Metallbänder (331) auf mindestens einem Teil der einen oder anderen der Innenwand (112) oder Außenwand (114) der Schallabsorptionsplatte (107) in eine Richtung im Wesentlichen quer zu der der Hauptkanäle (119) befestigt werden.

3. Verfahren zum Fertigen einer Schallabsorptionsplatte nach einem der Ansprüche 1 oder 2, **dadurch gekennzeichnet, dass** die Einheit aus Schallabsorptionszellen eine Struktur mit wabenförmiger Seele (109) umfasst, die eine Vielzahl wabenförmige Zellen (117) umfasst.

4. Verfahren zur Fertigung einer Schallabsorptionsplatte nach einem der Ansprüche 1 bis 3, **dadurch gekennzeichnet, dass** man die Einheit aus Schallabsorptionszellen durch Expansion von mindestens zwei Blättern (15), die miteinander in abwechselnden Verbindungszonen (Z) verbunden sind, bildet.

5. Verfahren zur Fertigung einer Schallabsorptionsplatte nach einem der Ansprüche 1, 3 oder 4, **dadurch gekennzeichnet, dass** man die Einheit aus Schallabsorptionszellen durch Expansion von mindestens zwei Blättern (15), die miteinander in reduzierten Verbindungszonen (Z') verbunden sind, die ein teilweises Kleben bilden, bildet, so dass bei der Expansion der Blätter Sekundärkanäle (435) im Wesentlichen quer zu den Hauptkanälen (331) gebildet werden.

6. Verfahren zur Fertigung einer Schallabsorptionsplatte nach einem der Ansprüche 1 bis 5, **dadurch gekennzeichnet, dass** die Rillen (119) in die Richtung der Länge oder in die Richtung der Breite der Einheit aus Schallabsorptionszellen profiliert werden.

7. Verfahren zur Fertigung einer Schallabsorptionsplatte nach einem der Ansprüche 1 bis 5, **dadurch gekennzeichnet, dass** die Rillen (119) schräg in Bezug auf die Länge oder auf die Breite der Einheit aus Schallabsorptionszellen profiliert werden.

8. Verfahren zur Fertigung einer Schallabsorptionsplatte nach einem der Ansprüche 1, 2, 6 oder 7, **dadurch gekennzeichnet, dass** die Einheit aus Schallabsorptionszellen einen akustischen Schaumstoff mit offenen Zellen umfasst.

9. Schallabsorptionsplatte (107), die durch das Verfahren zur Fertigung nach einem der Ansprüche 1 bis 8 hergestellt ist.

10. Gondel (1) für Luftfahrzeug-Turboluftstrahltriebwerk, die einen stromaufwärtigen Abschnitt umfasst, der eine Eingangslippe (3) eines Luftflusses F bildet, der akustisch zu dämpfen ist, einen mittleren Abschnitt und einen stromabwärtigen Abschnitt, **dadurch gekennzeichnet, dass** mindestens ein Querschnitt der Gondel mindestens eine Schallabsorptionsplatte (107) nach Anspruch 9 umfasst.

11. Gondel (1) für Turboluftstrahltriebwerk nach Anspruch 10, **dadurch gekennzeichnet, dass** eine Schallabsorptionsplatte (107) in dem externen Teil (5) der Lufteintrittslippe (3) befestigt ist, und dass die Gondel eine Enteisungsvorrichtung umfasst, die geeignet ist, um ein Enteisungsfluid von einer Zuführleitung (123) zu einer Auslasskammer (125) des Fluids über mindestens einen Hauptverbindungskanal (119) zwischen den Zellen der Einheit aus Schallabsorptionszellen zu befördern.

## Claims

1. A method for manufacturing an acoustic absorption panel (107) in which a reflective wall (112) is added on at least one portion of one of the faces (111, 113) of a set of acoustic absorption cells, at least one passage (118) is formed on the face (111, 113) opposite to said one of the faces (111, 113) over a portion of the thickness (E) of said assembly, said passage (118) forming at least one main communication channel (119) between the cells and being intended for the circulation of a de-icing fluid, said method being **characterized in that** at least one groove forming at least one passage (118) is machined on one of the faces (111, 113) of the set of acoustic absorption cells.

2. The method for manufacturing an acoustic absorption panel according to claim 1, **characterized in that** metal strips (331) are fastened on at least one portion of either of the inner (112) or outer (114) walls of the acoustic absorption panel (107), in a direction substantially transverse to that of the main channels (119).

3. The method for manufacturing an acoustic absorption panel according to any one of claims 1 or 2, **characterized in that** said set of acoustic absorption cells comprises a honeycomb core structure (109) comprising a plurality of honeycomb cells (117).

4. The method for manufacturing an acoustic absorption panel according to any one of claims 1 to 3, **characterized in that** the set of acoustic absorption cells is formed by expansion of at least two sheets (15) bounded together in bonding alternating areas (Z).

5. The method for manufacturing an acoustic absorption panel according to any one of claims 1, 3 or 4, **characterized in that** the set of acoustic absorption cells is formed by expansion of at least two sheets (15) bonded together in reduced bonding areas (Z') forming a partial bonding such that, during the expansion of said sheets, secondary channels (435) are formed substantially transverse to the main channels (331).

6. The method for manufacturing an acoustic absorption panel according to any one of claims 1 to 5, **characterized in that** the grooves (119) are profiled in the direction of the length or in the direction of the width of the set of acoustic absorption cells.

7. The method for manufacturing an acoustic absorption panel according to any one of claims 1 to 5, **characterized in that** the grooves (119) are obliquely profiled relative to the length or the width of the set of acoustic absorption cells.

8. The method for manufacturing an acoustic absorption panel according to any one of claims 1, 2, 6, or 7, **characterized in that** the set of acoustic absorption cells comprises an open cell acoustic foam.

9. An acoustic absorption panel (107) made by the manufacturing method according to any one of claims 1 to 8.

10. A nacelle (1) for an aircraft turbojet engine comprising an upstream section forming an inlet lip (3) of an air flow F to be acoustically attenuated, a median section and a downstream section, **characterized in that** at least one section of said nacelle comprises at least one acoustic absorption panel (107) according to claim 9.

11. The nacelle (1) for an aircraft turbojet according to claim 10, **characterized in that** an acoustic absorption panel (107) is fastened in the outer portion (5) of the air inlet lip (3) and **in that** said nacelle comprises a de-icing device capable of conveying a de-icing fluid from an inflow conduit (123) to a discharge chamber (125) of said fluid, via at least one main communication channel (119) between the cells of the set of acoustic absorption cells.
